# EUROPEAN PATENT SPECIFICATION

(11) **EP 3 707 379 B1**
(45) Date of publication and mention of the grant of the patent: **29.03.2023**
(21) Application number: 18797048.8
(22) Date of filing: 25.10.2018
(51) Int. Cl.: F04B 39/12, F04B 37/08

(54) **PUMPS**
PUMPEN
POMPES

(30) Priority: 10.11.2017 GB 201718622
(43) Date of publication of application: 16.09.2020
(73) Proprietor: Aspen Pumps Limited, Hailsham, East Sussex BN27 3WA (GB)
(72) Inventor: SAICH, Claire, Hailsham Sussex BN27 3WA (GB); FORSHAW, Christopher, Hailsham Sussex BN27 3WA (GB)
(74) Representative: HGF
(86) International application number: PCT/GB2018/053092
(87) International publication number: WO 2019/092394

(56) References cited:
- EP-B1- 0 198 911
- WO-A1-2010/028121
- WO-A1-2015/116788
- CN-A- 105 041 663
- CN-U- 203 822 615

## Description

This invention relates to an anti-vibration and filtration arrangements for pumps, particularly for condensate pumps in air-conditioning systems.

### BACKGROUND

Air-conditioning (AC) units are one of the most common methods of maintaining the temperature of a space and often use a refrigeration cycle which requires an evaporator and condenser. This allows warm air from a space to be blown over a refrigerant-cooled pipe and cooled before being returned to the space to be conditioned. However, one of the issues in this approach is the condensation that is formed on the pipes, as the warm humid air is cooled. This condensate is often left to drip off the pipes and is collected in a drip tray or reservoir. While a small portable AC unit may have a reservoir that can simply be emptied periodically by removing the condensate reservoir, the majority of AC units will have a reservoir that cannot be removed. In these cases, a pipe may be attached to the drip tray and the force of gravity may draw the condensate into a drain. However, if a pipe cannot be run downwards for the entirety of the path between the drip tray or reservoir and the drain, a pump must be fitted to pump out the condensate within the reservoir.

Using a condensate pump to remove the condensate from the reservoir allows for a smaller drip tray to be used, as the size of the drip tray is determined by the size of the AC unit, with the presumption the condensate can be removed at the required rate. However, in some cases, the condensate pump may not be able to empty the condensate reservoir sufficiently quickly or may be malfunctioning, which can result in an overflowing reservoir, potentially causing water to be introduced to the electronics of the system or any neighbouring systems. Large accumulations of condensate can also result in water damage to floors, walls and ceilings of a building which can render a structure unsafe. Therefore, it is essential that condensate pump reservoirs are effectively monitored and emptied. In such cases, AC units will come with a high level alert switch for shutting down the AC unit to prevent this situation.

Existing condensate pumps are often mounted within the housing of the AC unit or adjacent to the AC unit in a separate housing to minimise the travel between the condensate reservoir and the condensate pump for aesthetic reasons. However, as the pump motor operates, it causes the condensate pump to vibrate, which in turn causes the pump to rattle within the housing while the system is in use and generates undesirable noise. Housings for condensate pumps are often shaped as 'elbows' as they are typically designed to fit in confined spaces adjacent to where AC units are mounted, and to redirect fluid lines 90 degrees: a horizontal inlet conduit from a condensate reservoir at the bottom of the AC unit leading to the condensate pump and a vertical outlet conduit for removing the condensate. Typically, these elbows have wiring bundles running inside them in addition to the condensate pump and the fluid conduits. The vibrations that cause the condensate pump to vibrate within the elbow also cause the wiring and conduits within the elbow to vibrate and rattle against the casing, generating further undesirable noise.

Document WO 2010/028121 A1 is an example of a pumping system that includes a housing providing a noise reduction assembly. Further document WO 2015/116788 A1 relates to a method of retaining a noise attenuation device in a compressor cover.

### BRIEF SUMMARY OF THE DISCLOSURE

Viewed from a first aspect, the present invention provides an anti-vibration arrangement for a condensate pump comprising: a housing having a first opening; a reciprocating pump motor contained within the housing having a pump motor inlet in fluid communication with a pump motor outlet; and a resiliently deformable collar secured within the first opening having an aperture through which the pump motor inlet projects. The resiliently deformable collar comprises an outer portion secured to the housing, an inner portion to support the pump motor inlet and a connecting portion located between the outer portion and the inner portion, such that oscillations of the reciprocating pump motor cause the connecting portion to deform and allow the inner portion to move in reciprocating manner.

The anti-vibration arrangement for a condensate pump may comprise a moulded section comprising the resiliently deformable collar and an arrangement of support members to support the pump motor.

The anti-vibration arrangement for a condensate pump may comprise at least one resiliently deformable wall member configured to engage with an external casing, and be configured to absorb vibrations between the condensate pump and an external pump casing.

The resiliently deformable wall member may be secured by protrusions into the housing. The resiliently deformable wall member may be made from a thermoplastic elastomer.

The moulded section may be configured to form a seal when connected to a condensate pump reservoir.

The arrangement of support members may be made of a thermoplastic elastomer.

The housing may comprise at least one substantially curved surface.

The resiliently deformable collar may be made from a thermoplastic elastomer.

The housing may comprise a second opening within which a resiliently deformable outlet member is secured. The resiliently deformable outlet member comprises an outer portion secured to the housing, an inner portion to support the pump motor outlet having an aperture through which the pump motor outlet projects, and a connecting portion located between the outer portion and the inner portion, such that oscillations of the pump motor cause the connecting portion to deform and allows the inner portion to move in a reciprocating or lateral manner.

The resiliently deformable outlet member or the resiliently deformable wall member may be secured by protrusions into the housing.

The inner portion of the resiliently deformable outlet member may have a greater thickness than the connecting portion of the resiliently deformable outlet member.

The connecting portion of the resiliently deformable outlet member may be formed of a flexible membrane. The connecting portion of the resiliently deformable outlet member may be formed of a series of spaced ribs arranged radially from the motor inlet axis.

The inner portion of the resiliently deformable outlet member and the connecting portion of the resiliently deformable outlet member may be arranged concentrically. The inner portion of the resiliently deformable collar may have a greater thickness than the connecting portion of the resiliently deformable collar. The inner portion of the resiliently deformable collar and connection portion of the resiliently deformable collar may be arranged concentrically. The connecting portion of the resiliently deformable collar may be formed of a flexible membrane. The connecting portion of the resiliently deformable collar may be formed of a series of spaced ribs arranged radially from the motor inlet axis.

The anti-vibration arrangement for a condensate pump may comprise a protrusion located on an internal surface of the housing. The protrusion may be located substantially in line with the pump motor inlet and be configured to diffuse pulsation from the pump motor inlet. The protrusion may be conical.

The filtration system disclosed presently has specific advantages that may be independent of the anti-vibration features of the present invention. Therefore, there is also disclosure of a filtration system upstream of a pump inlet comprising a first section having a first surface with a first array of fingers extending in a first direction; and a second section mountable to the first section and having a second surface opposed to the first surface with a second array of fingers extending in a second direction substantially parallel to the first direction. Mounting the first section to the second section forms a fluid flow path between the first and second surfaces, and mounting the second section to the first section results in the first array of fingers interdigitating with the second array of fingers such that the spacing between adjacent interdigitated fingers is narrower than the spacing between adjacent fingers of either the first or second arrays of fingers across the whole of the fluid flow path.

The filtration system may further comprise at least one protrusion from at least one of the first or second opposed surfaces, where mounting the first section to the second section forms at least one barrier projecting from a lower surface in a direction opposed to gravity across the whole width of the fluid flow path.

The barrier may be configured to prevent particulates within the fluid of a first size reaching the interdigitated fingers. The barrier may have an arcuate cross-section. The first direction may be substantially perpendicular to the first surface.

Any of the first or second arrays of fingers may have a regular spacing between adjacent fingers. Any of the first plurality and second arrays of fingers may form a line substantially perpendicular to the fluid flow path. The interdigitated fingers may form a line with respect to the fluid flow path. The line may be a convex arcuate line with respect to the fluid flow path. When the interdigitated fingers are arranged as an arc, the surface area over which filtration can occur can be increased compared to arranging the interdigitated fingers in a straight line.

The second section may be detachably mounted to the first section. Any of the first or second sections may comprise at least one side wall that is substantially curved.

The haptic feedback system disclosed presently has specific advantages that may be independent of the anti-vibration or filtration features of the present invention. Therefore, there is also disclosure of a haptic feedback system for a pump comprising a housing having at least one touch sensing surface; a pump motor contained within the housing; a sensor unit contained within the housing having a touch sensor adjacent to the touch sensing surface to detect a user contact; and a microprocessor connected to the pump motor and the sensor unit. The touch sensor is configured to send a detection signal upon detection of the user contact, and the microprocessor is configured to receive a detection signal from the touch sensor and operate the pump motor in a predetermined manner whereby to vibrate the housing and provide haptic feedback to the user. This is particularly advantageous, as it allows the pump to be much more compact, as there is no need to house separate circuitry, masses and motors within the pump.

The motor may operate in a pulsed manner to indicate detection of the user contact at the touch sensing surface. The touch sensor may be a capacitance sensor or a resistance sensor.

The sensor unit may be a water level sensor. The water level sensor may be a capacitance sensor or an ultrasound transceiver.

The sensor unit may further comprise a light emitting diode which illuminates in response to receiving the touch signal or any of denoting the initiation, progression or termination of a pump motor operation in addition to the haptic feedback provided by the pump motor.

Thus, the present invention provides an anti-vibration arrangement which allows a condensate pump to operate with a minimum of noise. The anti-vibration arrangement independently isolates a pump motor within the condensate pump housing and the condensate pump housing from its external housing. The filtration system prevents debris from entering the pump motor which would increase wear of the internal pump components which would lead to noisier pump operation with time. Having a haptic feedback system that uses the condensate pump motor itself is particularly advantageous as it utilises the otherwise problematic vibrations of the pump motor to provide mechanical feedback to the user controlling the pump, which eliminates the need for further componentry to provide the mechanical feedback.

### BRIEF DESCRIPTION OF THE DRAWINGS

Embodiments of the invention are further described hereinafter with reference to the accompanying drawings, in which:
Figure 1 is a perspective view of a condensate pump incorporating anti-vibration measures, according to one embodiment;
Figure 2 is an exploded view illustrating an upper housing portion of the condensate pump of Figure 1 with a bumper member mounted on a bottom edge thereof, and an associated resiliently deformable member;
Figure 3A is a perspective view of the upper housing portion, connected to an intermediate housing portion, with the bumper member omitted;
Figure 3B is an exploded view of an intermediate housing portion and an upper housing portion, with a side wall of the upper housing portion omitted to show the interior;
Figure 4 is an exploded view of an intermediate housing portion and a lower housing portion;
Figure 5A is a lateral cross-sectional view of the upper housing portion, showing an upper end of a pump motor mounted within, but with the resiliently deformable outlet member omitted for clarity;
Figure 5B is a corresponding lateral cross sectional view of the lower housing portion, showing a bottom end of the pump motor mounted within;
Figure 5C is a cross-sectional view through the resiliently deformable outlet member, shown with an upper part of the pump motor mounted therein;
Figures 6A and 6B show respective upper and lower perspective views of an exemplary intermediate housing portion to connect the upper housing portion and the lower housing portion;
Figure 6C is a cross-sectional view through a resiliently deformable collar 52 for supporting a bottom end of the pump motor;
Figure 7 is a perspective lateral cross-sectional view of the lower housing portion, showing a schematic fluid flow path therethrough;
Figure 8A is a cut-away view through the intermediary housing portion, showing a first array of fingers projecting downwardly from an upper surface;
Figure 8B is an underside view of the same part as shown in Figure 8A;
Figure 9A is a cut-away view through the lower housing portion, corresponding to the part beneath the intermediary housing portion of Figure 8A and showing a complementary second array of fingers projecting upwardly from a lower surface;
Figure 9B is a plan view of the lower housing portion;
Figure 10A is a plan cross-sectional view of the combined lower and intermediate housing portions showing how the respective first and second arrays of fingers interdigitate;
Figure 10B is a corresponding frontal cross-sectional view of the combined lower and intermediate housing portions showing a reduced minimum spacing between the interdigitated fingers;
Figure 11 is an exploded view of a sensor module, pump motor and intermediate housing portion;
Figure 12 is a perspective view of a lateral cross-sectional view of a condensate pump housing where the upper, intermediate and lower housing portions are connected together, with the pump motor omitted for clarity.

### DETAILED DESCRIPTION

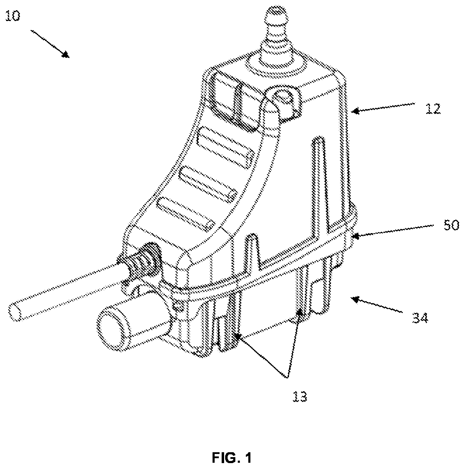

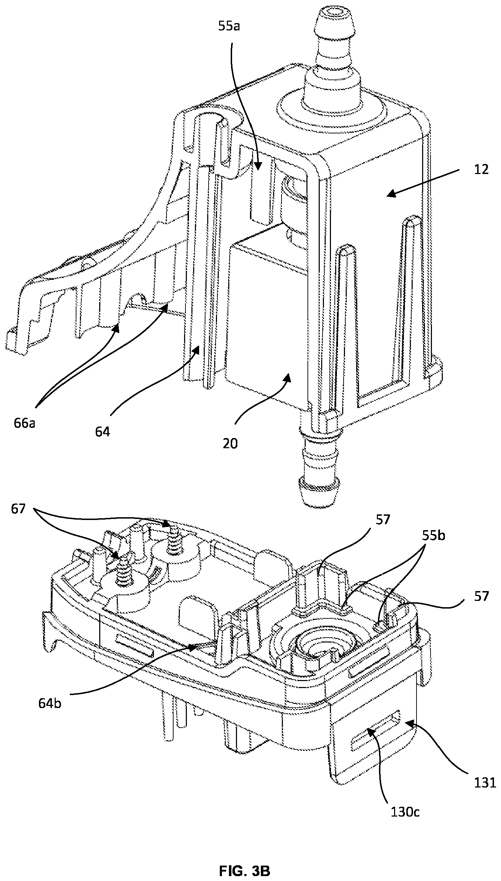

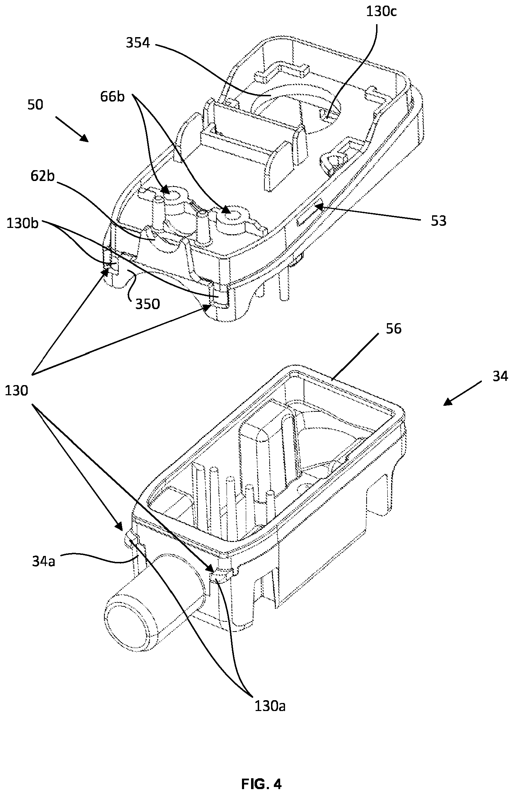

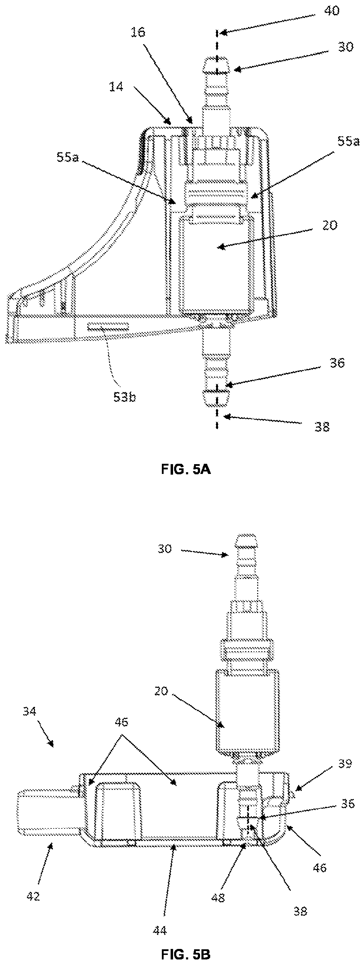

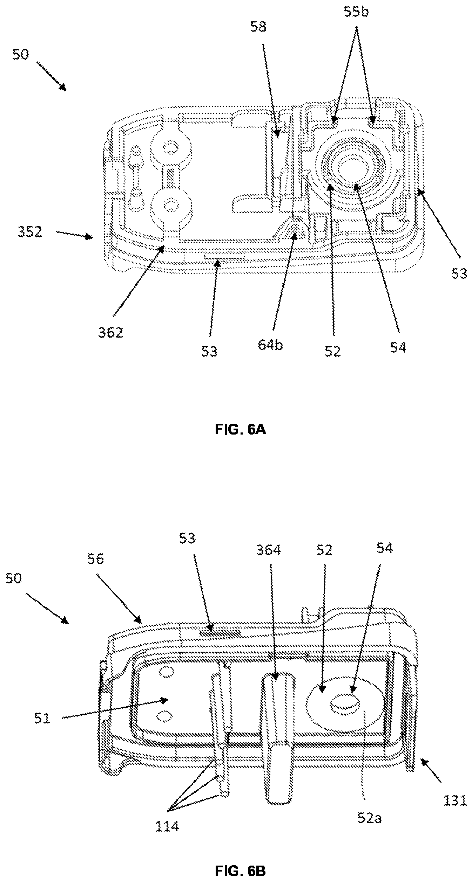

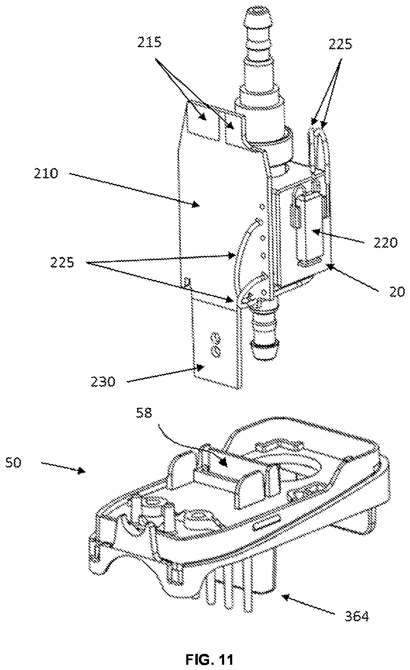

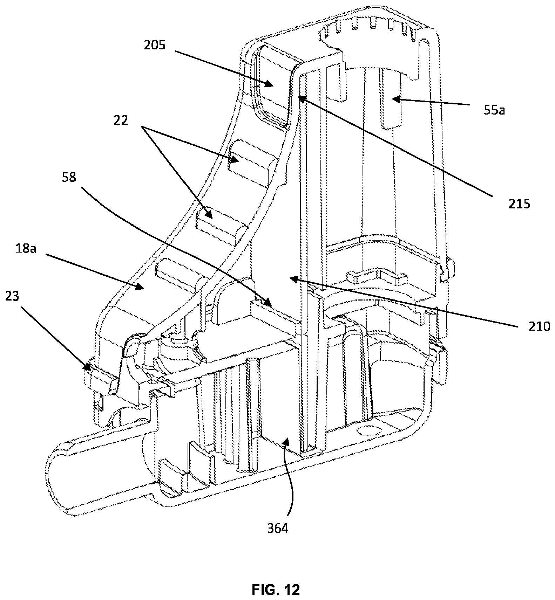

Fig. 1 shows an example of a condensate pump 10 with a housing formed of an upper housing portion 12, an intermediate housing portion 50 and a lower housing portion 34. The intermediate 50 and upper 12 housing portions house electrical components such as a pump motor 20 (see Fig. 5A) and sensor modules 210 (see Figs. 11 & 12). The design of the condensate pump 10 is such that the condensate pump 10 may be mounted within an elbow connector (not shown) in either a left-handed or right-handed configuration. This reversibility is particularly desirable, as it provides flexibility in where the condensate pump 10 can be located while still retaining the anti-vibration aspects of the present invention. A series of fixings 67 (preferably releasable fixings such as screws) are used to secure the intermediate housing portion 50 to the upper housing portion 12 (see Figs. 3B & 4). The screws 67 pass through holes 66b located within the intermediate housing portion 50 and holes 66a located within the upper housing portion 12. A reservoir volume is defined by the interior volume between the lower housing portion 34 and the intermediate housing portion 50. Specifically, the reservoir volume is defined by the bottom 44 and side 46 surface of the lower housing portion 34 (see Fig. 5B) and the bottom surface 51 of the intermediate housing portion 50 (see Fig. 6B). This reservoir volume is configured to collect condensate from an associated air-conditioning (AC) unit with which the pump 10 is in fluid communication. As set out in greater detail below, filter arrangements may be provided to filter the condensate as it enters and passes through the condensate pump 10. The intermediate housing portion 50 is configured to support different components such as the pump motor 20 (see Fig. 3B) and act as a seal between the upper housing portion 12 and the lower housing portion 34.

The pump 10 includes anti-vibration (AV) and filtration measures, as explained in greater detail below. It will be understood that these measures may be independent of one another such that according to some embodiments, the pump 10 includes either AV or filtration measures, but not both.

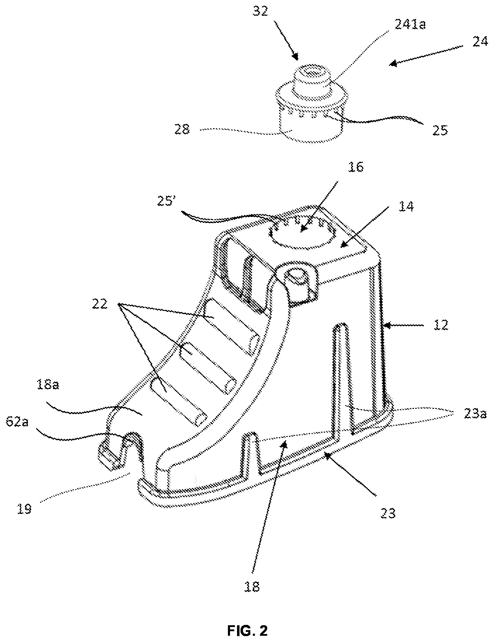

Figure 2 illustrates the upper housing portion 12 and an associated resiliently deformable outlet member 24. The upper housing portion 12 has a top surface 14 with an opening 16, and a number of side walls 18, 18a. As shown, one side wall 18a is concavely curved with three parallel, substantially 'bar-shaped', wall members 22 mounted thereon. While three wall members 22 are shown, there may be more or fewer wall members 22 in other arrangements. However, two points of contact with an external object, such as a cable (not shown), is preferable, because with just a single point of contact it would be possible for the object to pivot or 'rock', causing it to knock against the upper housing portion 12 of the condensate pump. In particular, vibrations may cause the object to knock against the housing, thereby generating unwanted noise. Although parallel bar-shaped wall members 22 are shown, different shapes and/or configurations of wall members providing two points of contact are possible. For example, a single, curved wall member, or a wall member that is polygonal (e.g. triangular, rectangular, etc.) or elliptical in shape could also provide at least two points of contact between an object and the upper housing portion 12, sufficient to prevent the object from pivoting to contact with the upper housing portion 12.

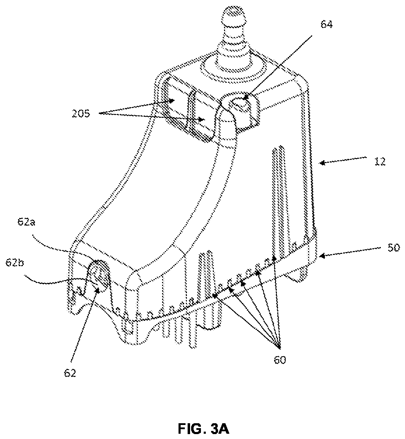

Around the bottom edge of the upper housing portion 12, there is a resiliently deformable bumper 23 which acts to prevent direct contact between the upper housing portion 12 and any external housing (not shown) that the pump 10 may be contained within. The bumper 23 extends around substantially the entire periphery of the bottom edge of the upper housing portion 12 - there may be a break 19 at the foot of the curved wall 18a to define an opening for receiving a power cable (refer to Figure 3A and associated description). The bumper 23 has a number of extensions 23a that extend up the side walls 18 of the upper housing portion 12 in a direction substantially away from the intermediate housing portion 50. A plurality of protrusions or ridges 60 on the side walls 18 of the upper housing portion 12 are positioned (see Fig. 3A) to underlie the bumper 23 and its associated extensions 23a for securing the bumper 23 to the upper housing portion 12. The bumper 23 and its associated extensions 23a are preferably twin-shot moulded. The bumper 23 and its associated extensions 23a further reduce the noise generated by the pump 10 due to the pump motor 20 vibrating, by providing further damping between the upper housing portion 12 and any external casing or container the pump 10 may be housed in.

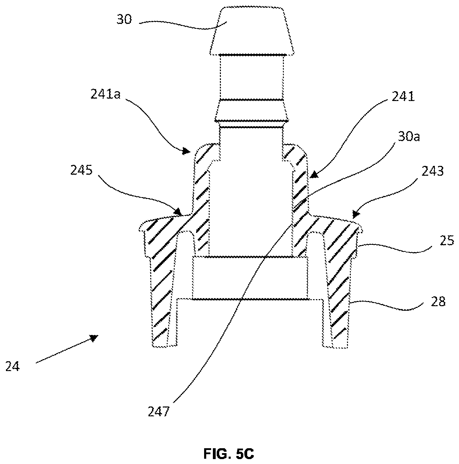

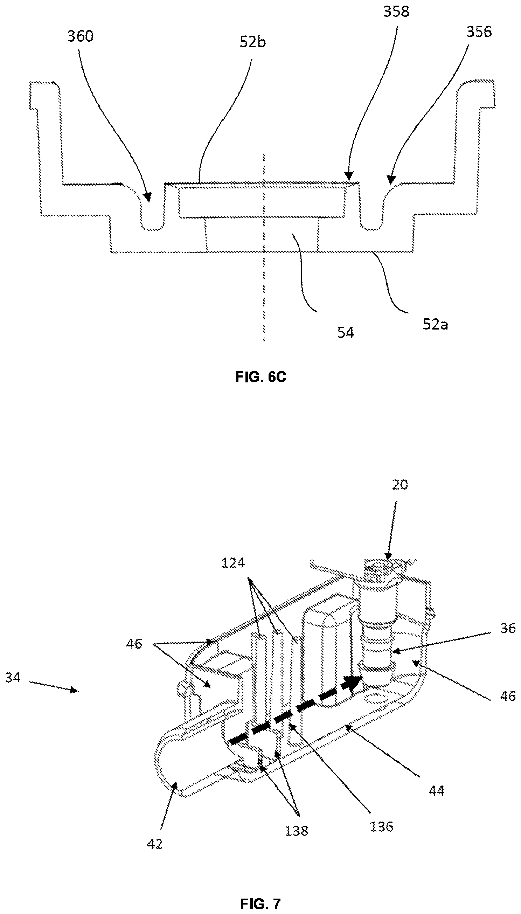

The resiliently deformable outlet member 24 also provides damping against noise due to oscillations of the pump motor 20 by isolating the pump - in particular an outlet 30 thereof (see Figures 5A, 5C) - from the upper housing portion 12. As best shown in Figure 3B, vertical stops 55a, 55b may be used to prevent excessive vertical displacement of the pump motor 20. As shown, the vertical stops 55a are formed of a series of fins extending from the inner surface of the upper housing portion 12 into the internal volume of the upper housing portion 12. This arrangement is particularly advantageous, as the fins may be configured to remain offset from the pump motor 20 by a nominal distance. The offset may be determined by design considerations as to how much upward displacement is acceptable for a given installation. The fins may be made from the same material as the upper housing portion 12. While the vertical stops 55a are shown as fins, it would be apparent that other shapes and geometries would be included by this description. This would include vertical stops 55a protruding from the internal surface of the top surface 14. Similarly, a series of vertical stops 55b may be included to limit the amount of downward displacement of the pump motor 20. As shown, the vertical stops 55b may be moulded into the intermediate housing portion 50 to form a non-contiguous surface offset an upper side surface 52b (see Fig. 6C) of the collar 52. Additionally, it is desirable to constrain the amount of axial rotation or twisting the pump motor 20 may undergo. This is achieved by a series of extensions 57 that extend in an upward direction from the intermediate housing portion 50. Where the extensions are deflectable, this will allow some twisting of the pump motor 20 during operation, which helps absorb the vibrations of the pump motor 20 and reduce the vibrations and noise generated by the pump. While the extensions 57 are shown extending from an upper surface of the vertical stops 55b, it would be apparent to the skilled person that the extensions 57 may be located in other locations, provided the extensions 57 are arranged to limit the amount of twist of the pump motor 20. This may include extensions 57 from an inner surface of the upper housing portion 12. The extensions 57 may be made from the same thermoplastic elastomeric material as the intermediate housing portion 50.

As shown in Figs. 2 and 5C in particular, the outlet member 24 is formed of hollow, concentric inner and outer portions 241, 243 which are joined by a connecting portion 245. As best seen in Fig. 5C, the inner portion 241 has an aperture 247 passing through it, profiled to secure a corresponding outer surface 30a of the pump motor outlet 30 for a tight and secure grip therewith. This is preferably achieved by under-sizing the aperture 247 such that the inner portion 241 stretches around the pump motor outlet 30 to form a tight fit, for example by providing a 4.9mm diameter aperture 247 for a 5.0mm diameter pump motor outlet 30. To aid the fit of the inner portion 241 around the pump motor outlet 30, the aperture 247 may have a tapered profile (not shown). Connecting portion 245 dampens the oscillations of the pump motor 20 and is formed as a thin section between the concentric inner 241 and outer 243 portions. In particular, a connection portion 245 with a thickness of 1.5mm and a radial width of 1.5mm has been found to be particularly effective at dampening the oscillations of the pump motor 20. The outer portion 243 has a substantially cylindrical outer surface 28, to fit within the corresponding circular opening 16 in the upper housing portion 12. The outer surface 28 of the outer portion 243 is preferably moulded to the upper housing portion 12 using a twin-shot moulding process. However, the outlet member 24 may be over-moulded to the upper housing portion 12 or be a separate component held by a mechanical fit within the opening 16. This would provide molecular adhesion or a mechanical fixation between the outlet member 24 and the upper housing portion 12. Ridges or protrusions 25 in the outer surface 28 are received in corresponding grooves 25' surrounding the opening 16 to more securely mount the outlet member 24 to the upper housing portion 12. As shown, the outer portion 243 is substantially fully located within the upper housing portion 12, but the inner portion 241 includes a section 241a that projects upwardly beyond the top surface 14 of the upper housing portion 12. It will be appreciated that other geometries are possible and may depend on the shape of the pump motor outlet 30 and the upper housing portion 12.

The connecting portion 245 is made from a thinner section of material than the inner and outer portions, and is profiled to deform when the pump motor oscillates. Thus, the deformable outlet member 24 is able to securely mount the motor outlet 30 to the upper housing portion 12, while significantly damping vibrations of the pump motor 20. This mitigates against vibrations of the pump motor 20 propagating to the upper housing portion 12, which in turn reduces the associated noise. Preferably, the deformable outlet member 24 is profiled to dampen axial and lateral movements of the pump motor 20, as well as rocking movements. As shown, the design of the deformable outlet member 24 enables the motor outlet 30 to be partially eccentric to the inner and outer portions 241, 243, while still providing a seal between the deformable outlet member 24 and the upper housing portion 12.

The connecting portion 245 may be formed of a continuous section of material between the inner and outer portions 241, 243. Alternatively, the connecting portion 245 may be formed of a series of spaced ribs (not shown), which may be radial.

Any of the resiliently deformable outlet member 24, wall members 22 bumper 23 or bumper extensions 23a may be made of a thermoplastic elastomer (TPE). The resiliently deformable outlet member 24, wall member 22 and bumper 23 and extensions 23a need not be made from the same material. The upper housing portion 12 and/or the resiliently deformable outlet member 24 may be 3D printed or made from injection moulding processes such as two-shot plastic injection moulding or co-injection. The upper housing portion may be made from a thermoplastic polymer. The thermoplastic polymer may be ABS.

Figure 3 shows a perspective view of the upper housing portion 12 attached to the intermediate housing portion 50. The intermediate housing portion 50 has a plurality of protrusions 53 located on an outer surface (see Fig. 4) to engage with corresponding slots or recesses 53b (see Fig. 5A) located on an inner surface of the upper housing portion 12 to provide a snap-fit engagement between the respective upper and intermediate housing portions 12, 50. Also shown is an opening 62 to receive a power cable. The opening 62 is formed by an upper part 62a defined in the bottom edge of the curved side wall 18a, within the break 19, and a lower part 62b defined in a facing portion of the intermediate housing portion 50, which combine when the upper housing portion 12 is connected to the intermediate housing portion 50 to form the circular opening 62. While a circular opening 62 is shown in the Figure, it would be appreciated that other shapes of opening may be created by combining the upper and lower parts 62a, 62b. A vent 64 is provided which extends from the upper surface 14 through the upper housing portion 12 and through a port 64b located in the intermediate housing portion 34. The port 64b is in fluid communication with the vent 64 such that the vent 64 provides an outlet for air within the internal region between the lower housing portion 34 and the intermediate housing portion 50. As shown, the vent 64 is located at a corner where the curved wall 18a, one of the side walls 18 and the top surface 14 intersect, but it will be understood that other locations are possible. The port 64b may be located substantially below the vent 64 in the upper housing portion 12.

Figure 4 is an exploded view of the intermediate housing portion 50 and the lower housing portion 34. This view shows how the lower housing portion 34 may be mounted and secured to the intermediate housing portion 50 by a releasable locking mechanism 130. The releasable locking mechanism 130 allows the lower housing portion 34 to be detachably mounted to the intermediate housing portion 50. As shown, locking mechanism 130 comprises a pair of lugs 130a projecting from a side wall 34a of the lower housing portion 34 which are received in corresponding openings 130b in a flange 350 on a bottom edge of a corresponding side 352 of the intermediate housing portion 50. The locking mechanism 130 further includes an opening 130c which is formed within a resiliently deflectable tab 131 at the rear of the intermediate housing portion 50 (see also Fig. 3B). The opening 130c releasably receives a corresponding protrusion 39 on the lower housing portion 34 (see Figure 5B). The tab 131 is sufficiently flexible to allow the lower housing portion 34 to be removed from the intermediate housing portion 50 for cleaning or other maintenance activities by pivoting the lower housing portion 34 downwardly via the lugs 130a within the corresponding openings 130b, thereby disengaging of the protrusion 39 from the opening 130c. However, it will be understood that other mechanisms known in the art could be employed to mount the lower housing portion 34 to the intermediate housing portion 50, optionally in a releasable manner. A substantially rectangular, resiliently deformable element 56 encircles the upper edge of the lower housing portion 34 and deforms when the intermediate housing portion 50 and lower housing portion 34 are secured together, thereby forming a fluid-tight seal, ensuring that no condensate can inadvertently leak out of the condensate reservoir. While the resiliently deformable element 56 is shown as a separate element of the pump housing, the resiliently deformable element 56 may be twin-shot moulded as part of the lower 34 or intermediate 50 housing portion or be over-moulded onto either of the lower 34 or intermediate 50 housing portion. The resiliently deformable element 56 may be made from a thermoplastic elastomer material.

Figure 5A is a lateral cross-sectional view of the upper housing portion 12 of the condensate pump 10 of Figure 2, showing an upper end of a pump motor 20 mounted within. The deformable outlet member 24 and lower housing portion 34 are omitted for clarity. The pump motor 20 is shown with a motor inlet 36 having an inlet axis 38 and a motor outlet 30 having an outlet axis 40. In this example, the respective axes 38, 40 are coincident, but that need not be the case. The motor inlet 36 and motor outlet 30 are in fluid communication via the pump motor 20. The motor outlet 30 is shown passing through the opening 16 in the top surface 14 of the upper housing portion 12, for pumping condensate from the reservoir volume out of the lower housing portion 34 - typically via outlet tubing or trunking (not shown) attached to the pump motor outlet 30.

Figure 5B is a corresponding lateral cross-sectional view of the lower housing portion 34 of the condensate pump, showing a bottom end of the pump motor 20 mounted within. The lower housing portion 34 has a fluid inlet 42, a bottom surface 44 and a plurality of side surfaces 46.

The pump motor 20 may be a reciprocating pump. Reciprocating pumps typically comprise a piston within a cylinder and associated one-way valves to generate alternating cycles of high and low pressure to drive a fluid through a connected pipe, which causes vibration in the tubing. The pipe can be considered to have a suction portion (the pump motor inlet 36) connected to the cylinder via a suction valve, and a delivery portion (the pump motor outlet 30) connected to the same cylinder via a delivery valve. As the piston expands the volume in the cylinder, this generates a vacuum in the cylinder. A vacuum in the cylinder forces the delivery valve shut and opens the suction valve, drawing fluid into the cylinder via the suction portion. As the piston compresses the fluid in the cylinder, the high pressure forces the suction valve shut and opens the delivery valve, causing fluid to be expelled through the delivery pipe. By repeating this cycle, a reciprocating pump is able to pump fluid from the suction portion to the delivery portion via the cylinder. However, the process of forcing the suction valve shut sends a pressure wave back down the suction portion (the pump motor inlet 36). The repeated pressure waves generate undesirable vibrations and pulsation of the fluid being drawn in from the reservoir volume, particularly, it is thought, as a result of the pressure waves reaching and being reflected against the bottom surface 44 of the lower housing portion 34.

By positioning a protrusion 48 on the bottom surface 44, substantially in alignment with the motor inlet axis 38, the pump motor inlet 36 is aligned with the protrusion and pulsation in the water caused by the pump motor 20 during operation is dissipated, due to the shape of the protrusion, thereby reducing the effects of the repeated pulsations. The cone shape deflects the pulses rather than reflecting them (as would a planar surface perpendicular to the pump motor inlet axis) while the external anti-vibration elements 13 (see Figure 1) absorb some of the energy of the received pulsation and minimise any vibrations being transferred to an external housing (not shown) containing the condensate pump 10. Because the pulsation in the water is dissipated, this reduces the noise of the pump 10 during operation. In this example, the protrusion 48 is substantially conical or cone-shaped, but other shapes may be used provided that they dissipate the pulsations in the water. The protrusion 48 may be made of ABS or silicon or a different material to that of the remainder of the lower housing portion 34. By being made of a material with some elasticity, energy of the water pulsations may be further dissipated or absorbed.

Figures 6A and 6B show respective upper and lower perspective views of an exemplary intermediate housing portion 50 to connect the upper housing portion 12 and the lower housing portion 34. The intermediate housing portion 50 includes an aperture 354 (see also Figure 4) in which is mounted a resiliently deformable collar 52 to support the pump motor 20. The collar 52 is a generally disc-shaped member with a central hole 54 passing therethrough sized to receive the pump motor inlet 36 with a tight grip, thereby securely mounting the lower end of the pump motor 20 to the intermediate housing portion 50. While the collar 52 is shown as a disc-shaped member and the associated aperture 354 is shown as a circle, it would be appreciated that other shapes would be equally suitable provided they are able to receive the pump motor inlet 36 and prevent liquid leaking from the lower housing portion 34 into the intermediate housing portion 50.

As best seen in Figs. 6B and 6C, the collar 52 has a flat underside 52a, which lies substantially in line with the bottom surface 51 of the intermediate housing portion 50. The opposite, upper side 52b of the collar 52 sits within the aperture 354 and comprises a substantially cylindrical outer portion 356 the outer surface of which is located within the aperture 354, and a substantially cylindrical inner portion 358, connected to the outer portion 356 by a thinner connecting portion 360 which dampens the oscillations of the pump motor 20. In particular, a connecting portion 360 with a thickness of 1.5mm and a radial width of 1.5mm has been found to be particularly effective at dampening the vibrations of the pump motor 20. While not essential, the collar 52 is preferably twin-shot moulded with the intermediate housing portion 50. The central hole 54 passes through the inner portion 356 and stretches to fit around a corresponding outer surface of the pump motor inlet 36 to form a tight and secure grip therewith. This is preferably achieved by under-sizing the central hole 54 such that the inner portion 358 stretches around the pump motor inlet 36 in the same manner as the outlet member 24 is stretched around the corresponding pump motor outlet 30. The connecting portion 360 is made from a thinner section of material than the inner and outer portions, and is profiled to deform when the pump motor oscillates. The connecting portion may be formed of a continuous section of material between the inner and outer portions. Alternatively, the connecting portion may be formed of a series of spaced ribs (not shown), which may be radial. The resiliently deformable collar 52 may be made of a thermoplastic elastomer. The seal between the aperture 54 and the motor inlet 36 ensures the electrical components contained within the upper housing portion 12 can be kept isolated from the liquid in the reservoir, and thereby remain dry.

Thus, the collar 52 is able to securely mount the motor inlet 36 to the lower housing portion 34, while significantly damping vibrations of the pump motor 20. This mitigates against vibrations of the pump motor 20 propagating to the lower housing portion 12, which in turn reduces the associated noise. Preferably, the collar 52 is profiled to dampen axial and lateral movements of the pump motor 20, as well as rocking movements. It will be appreciated that other geometries are possible and may depend on the shape of the pump motor inlet 36 and the lower housing portion 34.

Hence, the collar 52 and the resiliently deformable outlet member 24 together combine to mount the pump motor 20 within the housing in an isolating manner. The geometries of the collar 52 and the resiliently deformable outlet member 24 may be arranged such that their respective damping of the movements of the pump motor 20 is tuned.

The intermediate housing portion 50 also includes a resiliently deformable element 362 to form a seal between the intermediate housing portion 50 and the upper housing portion 12, a slot 58 and an associated receptacle 364 to receive a water level sensor 230 (see Fig. 11). The intermediate housing portion 50 may be 3D printed. The intermediate housing portion 50 may be made from a polymer. Preferably, the polymer is polypropylene, as this allows the resiliently deflectable tab 131 to be releasably secured to the lower housing portion 34.

Figure 7 is a lateral cross-sectional view of the lower housing portion 34, showing a fluid flow path 136 therethrough. The bottom 44 and side 46 surfaces of the lower housing portion 34 define a fluid flow path 136 for fluid passing through the lower housing portion 34. The lower housing portion 34 includes a filtration system spanning across the entire fluid flow path 136. As shown in Fig. 7, the filtration system comprises a plurality of fingers 124 extending upwardly from the bottom surface 44 in the form of an array and a plurality of barriers 138 extending upwardly from the bottom surface 44, upstream of the fingers 124. As shown, a fluid inlet 42 is located upstream of the filtration system and a fluid outlet, is located downstream of the array of extending fingers 124. The fluid outlet may be equivalent to the motor inlet 36 which may remove the need for a separate fluid outlet in the lower housing portion, as condensate could be pumped out of the reservoir volume directly. However, this is not essential to the invention. The barriers 138 are located upstream of the plurality of extending fingers 124 and are arranged to act as weirs to stop larger debris and particles in the fluid reaching the fluid outlet 36, as this may cause damage to the pump motor 20 or become clogged in the filtration system, which is intended to prevent finer debris from reaching the plurality of extending fingers 124. As shown, the barriers 138 extend in the same substantially perpendicular direction from the bottom planar surface 44 of the lower housing portion 34. However, the two barriers 138 need not extend in the same direction. As fluid encounters the barriers 138, heavier particles in the fluid are not able to be lifted over the barriers 138 by the force of the fluid flow and accordingly settle to the bottom surface 44 in front of the barriers. A single barrier may be sufficient, but a greater number of barriers 138 may increase the effectiveness of the filtration. The second, downstream, barrier may be taller than the first, upstream, barrier. Larger particles would be filtered out by the first barrier, whilst the increased height of the second barrier would filter out smaller particles. The or each barrier extends across the entire fluid flow path 136 to avoid fluid flow bypassing this filtration stage. As shown, there are two barriers. However, more or fewer barriers are conceived by this description. The lower housing portion 34 may be made by 3D printing processes. The lower housing portion 34 may be made from ABS.

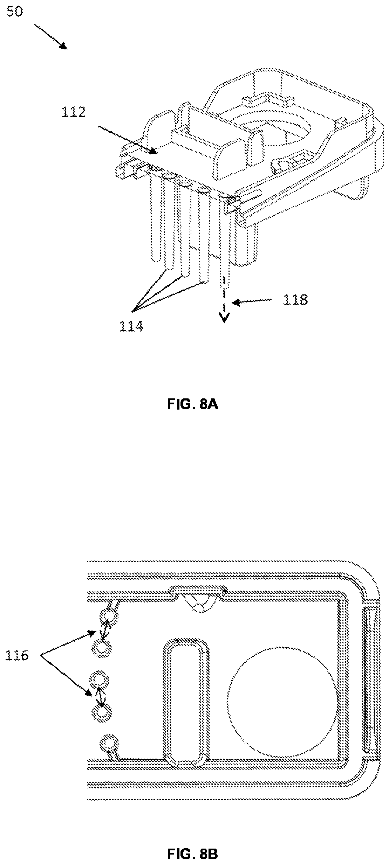

Figure 8A is a cut-away view through the intermediate housing portion 50, showing a first array of fingers projecting downwardly from an upper surface. The intermediate housing portion 50 provides one part of a 'comb' filtration system. The intermediate housing portion 50 is shown in Fig. 8A as having an upper surface 112 from which a plurality of extending fingers 114 extend in the form of an array in a direction 118 away from the planar surface 112. However, a planar surface is not essential to the filtration system. As shown, the fingers 114 extend in a direction 118 substantially perpendicular to the upper surface 112 and are substantially straight. However, this need not be the case, and the plurality of extending fingers 114 may take other forms. Any of the first plurality 114 or second plurality of fingers 124 may have a tapered profile. Including a taper or draft in the design is particularly advantageous, as it allows the intermediate housing 34 to be manufactured as a moulded part which can be easily removed from any tooling. While the plurality of extending fingers 114 are shown to be arranged in an arc to direct debris away from the fluid flow path 136 and towards the side of the lower housing portion 34, it is not essential that the footprint of the extending fingers 114 forms an arc. An arc of extending fingers 114 also provides a greater surface area over which filtration can occur compared to a straight line of extending fingers 114.

Figure 8B is a plan view of the same part as shown in Fig. 8A. The figure shows the array of extending fingers 114 with a minimum spacing 116 between adjacent extending fingers 114. The extending fingers 114 may have a regular minimum spacing 116 between adjacent fingers. The minimum spacing 116 would be the smallest size of particle or debris that could be filtered out by the intermediate housing portion 50 without the remaining part of the 'comb' filter contained within the lower housing portion 34. The minimum spacing 116 between fingers 114 may be limited by the manufacturing processes available, as tooling for particularly fine filters, which would be required to achieve a small minimum spacing may be significantly more difficult, ergo expensive than for filters with coarser spacing.

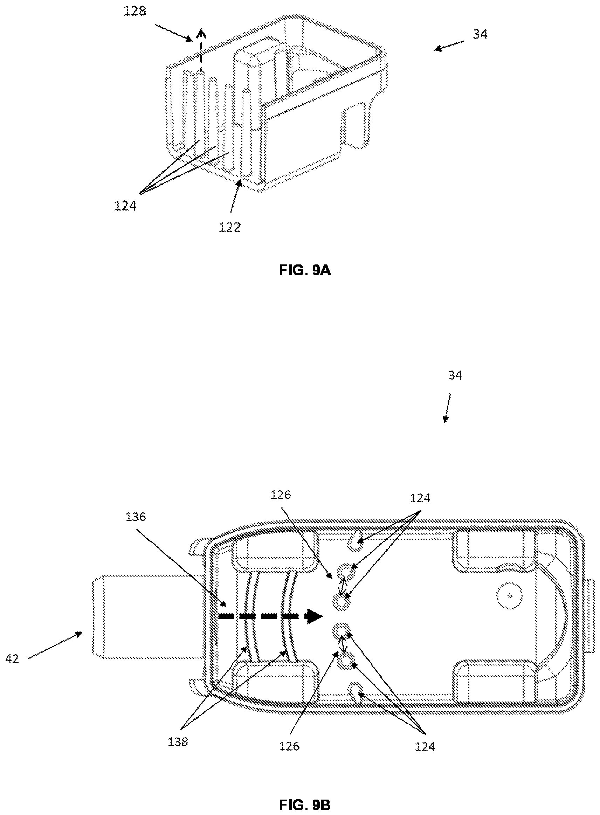

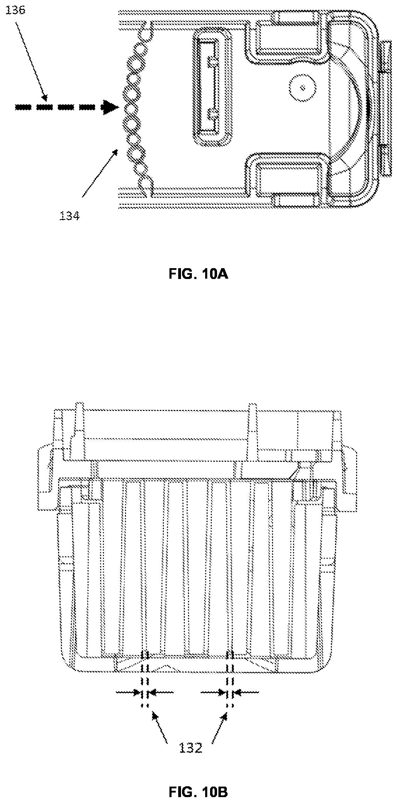

Figure 9A is a cut-away view through the lower housing portion 34, corresponding to the part beneath the intermediary housing portion 50 of Figure 7A and showing a complementary second array of fingers 124 projecting upwardly from a lower surface 122. The figure shows a plurality of extending fingers 124 extending from a lower surface 122 in a direction 128. As shown, the lower surface 122 is a planar bottom surface of the lower housing portion 34. A planar surface is not essential to the filtration system. As shown, the array of fingers 124 extends in a direction 128 substantially perpendicular to the planar surface 122 and are substantially straight. However, this need not be the case, and the second array of fingers 124 may take other forms, as described above with respect to the first array of fingers 114, *mutatis mutandis.* As with the extending fingers 114 of the intermediate housing portion 50, it is not a specific arrangement, geometry or dimensions of the extending fingers that enables the filtration system to be particularly effective. It is the second array of fingers 124 of the lower housing portion 34 being able to interdigitate with the first array of fingers 114 of the intermediate housing portion 50 that results in an effective filtration system. This will be achieved through a combination of the arrangements, dimensions and geometry of the extending fingers, as described more fully by reference to Figures 10A and 10B in particular.

Figure 9B is a plan view of lower housing portion 34. The plurality of extending fingers 124 has a minimum spacing 126 between them. The extending fingers 124 may have a regular minimum spacing 126 between adjacent fingers. This minimum spacing 126 would be the smallest size of particle or debris that could be filtered out by the lower housing portion 34 part of the 'comb' filter without the intermediate housing portion 50 part of the 'comb' filter. Also shown are barriers 138 that have an arcuate cross-section and span the width of the lower housing portion 34. It is not essential for the barriers 138 to have an arcuate cross-section. However, it is advantageous to have arcuate barriers 138, as this will direct debris away from the fluid flow path 136 and to the sides of the lower housing portion 34.

Figure 10A is a plan cross-sectional view of the combined lower 34 and intermediate 50 housing portions showing how the respective first 114 and second 124 arrays of fingers interdigitate. As shown, the first plurality of extending fingers 114 and the second plurality of extending fingers 124 interdigitate to form an arrangement of interdigitated fingers 134. As shown, the fluid flow path 136 intersects the combined arrangement of extending members 134 at a substantially perpendicular angle. The interdigitated fingers 134 are shown forming an arc across the span of the reservoir 34. While this is desirable, as it directs debris to the side walls of the reservoir, this is not essential to the invention. While the two end fingers are shown connected to the side surface of the lower housing portion 34 in Figure 9B, it would be appreciated that only one of the second plurality of fingers 124 may be joined to the side surfaces of the lower housing portion 34 or in other arrangements of interdigitating fingers 134, more than two fingers may be connected to the side surface of the lower housing portion 34.

Figure 10B is a frontal cross-sectional view of the same part as shown in Figure 10A and shows a reduced minimum spacing 132 between the interdigitated fingers. The spacing 132 between interdigitated fingers 134 is considerably smaller than the spacing 116, 126 between the extending fingers of the separate intermediate 50 or lower 34 housing portion parts of the filtration system individually. The minimum spacing 132 between interdigitated members may be as small as 0.5885mm. However, modifying the geometry of the first 114 and second 124 sets of extending fingers may achieve finer or coarser spacing 132 as required. This is possible because the footprints of the two sets of extending fingers 114, 124 are arranged to overlap when the lower housing portion 34 is mounted to the intermediate housing portion 50 and the directions 118, 128 the fingers extend in are substantially parallel. That is to say, the direction 118 fingers 114 extend in is substantially parallel to the direction 128 fingers 124 extend in. This results in the two sets of fingers 114, 124 interdigitating when the lower housing portion 34 is secured to the intermediate housing portion 50. This ensures the interdigitated fingers 134 form a filter across the width of the fluid flow path 136 with a considerably smaller minimum spacing 132 than either of the separate arrangements of the intermediate housing portion 50 or lower housing portion 34.

This two-part filtration system provides a way of creating considerably finer filtration without having to manufacture components with such fine spacing directly. With the interdigitated fingers 134 arranged as an arc, the surface area over which filtration can occur is also increased compared to having the fingers 134 arranged in a straight line.

Figure 11 is an exploded view of a sensor module 210, pump motor 20 and intermediate housing portion 50. The resiliently deformable collar 52 and resiliently deformable element 56 have been omitted for clarity. The sensor unit 210 is shown with two touch sensors 215 and a water level sensor 230. The intermediate housing portion 50 is configured to support the sensor module 210 and receive the water level sensor 230 within the slot 58. The water level sensor 230 is preferably a capacitance sensor, but may also be a resistive sensor or an ultrasound transceiver. The sensor module or PCB 210 is electrically connected to the touch sensors 215, the water level sensor 230 and a controller or microprocessor (not shown). A thermal cut-out module 220 may be connected to the sensor module 210 via wired connections 225. The wired connections should be arranged such that they do not constrain the motion of the pump motor 20 and interfere with the anti-vibration function of the collar 52. The arrangement of wired connections 225 shown in Figure 11 should be taken as exemplary. It would be understood that other arrangements of wired connections are conceived by this description. The sensor module 210 is powered by a mains connection (not shown) to the condensate pump. In embodiments where the water level sensor 230 is a capacitance sensor, the water level sensor 230 is able to detect the water level indirectly from slot 58 of the intermediate housing portion 50. That is to say, the water level sensor 230 is not required to physically contact the fluid in the reservoir volume to determine the water level in the lower housing portion 34. The water level sensor 230 is able to operate the motor pump 20 through level sensing between on and off positions, to allow variable speed pumping, and high level safety, at which point the AC unit would be shut down while the condensate pump 10 continues to operate and pump out condensate in the reservoir 34. The condensate pump 10 may be configured to connect to a building management system (BMS) via a relay circuit. Such relay circuits are typically configurable between normally-open and normally-closed modes of operation depending on the desired trigger to the BMS. Controlling the AC unit using switched/permanent live connections can be achieved by wiring the condensate pump, the BMS and AC unit into a wiring guide, such as that described in application GB1716137.3. The touch sensors 215 may be used to change the relay circuit between normally-open and normally-closed configurations.

Figure 12 is a perspective view of a lateral cross-sectional view of a condensate pump housing where the upper 12, intermediate 50 and lower 34 housing portions are connected together with the pump motor 20 omitted for clarity. The touch sensing surface 205 of the upper housing portion 12 is located substantially above slot 58 and forms part of the curved side wall 18a of the upper housing portion 12. It is advantageous to locate the touch sensors 215 on the same sensor module 210 as the water level sensor 230, as this allows the circuitry and microprocessor which is already used to detect the water level to be used to detect and process user contacts at the touch sensing surface 205. User contacts are a way to input commands to the microprocessor and require a user to be in close proximity of the touch sensing surface 205 so that the touch sensor 215 is able to detect contact and send a detection signal to the sensor module 210, which can transmit a signal to the microprocessor indicating a user contact has been detected. While it is advantageous to use haptic feedback to detect user inputs, it is not always apparent that commands have been detected or received by a sensor or a controller. Therefore, the sensor module 210 may also include one or more LEDs (not shown) to indicate receipt of a detection signal or that a particular pump function is in operation. This may be using any combination of flashing LEDs, or different coloured LEDs to indicate different operating statuses. In embodiments where the lower housing portion 34 and slot 58 are translucent, there is no need for the LED to be on the external surface of the pump 10, as it will be visible through the slot 58 and lower housing portion 34. The associated receptacle 364 of the slot 58 may be made translucent by reducing the thickness of the receptacle surfaces such that light from an LED may pass through the receptacle surface. Otherwise, the LEDs may only be visible when the lower housing portion 34 is removed, for example, during pump maintenance or testing. LEDs may illuminate in response to receipt of a touch signal. Detection of a touch signal at the touch sensing surface 205 may, for example, be used to denote the initiation, progression or terminal of the pump motor operation.

Haptic feedback is typically provided by a motor rotating a mass about an eccentric axis. That is to say the motor rotates an axis about an axis off-set from its centre of gravity, which generates an uneven centripetal force which causes the motor to oscillate which results in a vibration that can be felt and provides haptic feedback. However, the present pump uses the pump motor 20 to generate vibrations instead of a separate eccentric rotating mass to provide feedback to the user. This is particularly advantageous, as it allows the pump to be much more compact, as there is no need to house separate circuitry, masses and motors within the pump. As the pump motor 20 is controlled in by the microprocessor already, provision of extra pump motor 20 commands to correspond to different user inputs is a particularly efficient use of the limited processor memory in microprocessor. User inputs that may be inputted by touch may be to indicate commands to perform any of: a pump test/drain down function, a high level test and the ability to change between normally-open and normally-closed modes of operation where the pump 10 is configured to connect to a BMS via a connected electrical relay circuit. Feedback to these exemplary user instructions may be through any combination of pulsed or continuous pump motor 20 operations to cause the pump 10 to vibrate and provide the user with sufficient feedback to let them know their touch instruction has been received. To ensure reliable detection of touch at the touch sensing surface 205, the slot 58 and upper housing portion 12 are configured such that, the touch sensors 215 are positioned in close proximity to the touch sensing surfaces 205 of the upper housing portion 12. As shown, this is achieved through upper housing portion 12 comprising a side wall 18a shaped to locate the touch sensing surfaces 205 close to the touch sensors 215 and the slot 58 of the intermediate housing portion 50 being configured to support the sensor module 210 and locate the water level sensor 230 within the reservoir volume so that the water level sensor 230 is able to detect the water level.

The present invention provides an anti-vibration condensate pump that incorporates a two-part comb filtration system and a haptic feedback system which utilises the existing circuitry and microprocessor of the water level sensor.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

The invention is not restricted to the details of any foregoing embodiments.

## Claims

1. An anti-vibration arrangement for a condensate pump (10) comprising:
a housing having a first opening (354);
a reciprocating pump motor (20) contained within the housing having a pump motor inlet (36) in fluid communication with a pump motor outlet (30); and
a resiliently deformable collar (52) secured within the first opening (354) having an aperture (54) through which the pump motor inlet (36) projects;
wherein the resiliently deformable collar (52) comprises an outer portion (356) secured to the housing, an inner portion (358) to support the pump motor inlet (36) and a connecting portion (360) located between the outer portion (356) and the inner portion (358), such that oscillations of the reciprocating pump motor (20) cause the connecting portion (360) to deform and allow the inner portion (358) to move in reciprocating manner.

2. An anti-vibration arrangement according to claim 1 further comprising:
a moulded section comprising the resiliently deformable collar (52) and an arrangement of support members (57) to support the pump motor (20).

3. An anti-vibration arrangement according to claim 2 further comprising:
at least one resiliently deformable wall member (22, 23) configured to engage with an external casing,
wherein the resiliently deformable wall member (22, 23) is configured to absorb vibrations between the condensate pump (10) and the external pump casing.

4. An anti-vibration arrangement according to claim 3, wherein the resiliently deformable wall member (22, 23) is made from a thermoplastic elastomer.

5. An anti-vibration arrangement according to any of claims 2 to 4, wherein the moulded section is configured to form a seal when connected to a condensate pump reservoir.

6. An anti-vibration arrangement according to any of the preceding claims, wherein the housing comprises at least one substantially curved surface (18a), and/or wherein the resiliently deformable collar (52) is made from a thermoplastic elastomer.

7. An anti-vibration arrangement according to any preceding claim, wherein the housing comprises a second opening (16) within which a resiliently deformable outlet member (24) is secured, wherein the resiliently deformable outlet member (24) comprises an outer portion (243) secured to the housing, an inner portion (241) to support the pump motor outlet (30) having an aperture (247) through which the pump motor outlet (30) projects, and a connecting portion (245) located between the outer portion (243) and the inner portion (241), such that oscillations of the reciprocating pump motor (20) cause the connecting portion (245) to deform and allows the inner portion (241) to move in a reciprocating or lateral manner.

8. An anti-vibration arrangement according to claim 7, wherein any of the resiliently deformable outlet member (24) or the resiliently deformable wall member (22, 23) is secured by protrusions (25, 60) into the housing.

9. An anti-vibration arrangement according to claim 7 or claim 8, wherein the inner portion (241) of the resiliently deformable outlet member (24) has a greater thickness than the connecting portion (245) of the resiliently deformable outlet member (24).

10. An anti-vibration arrangement according to any of claims 7 to 9, wherein the connecting portion (245) of the resiliently deformable outlet member (24) is formed of a flexible membrane.

11. An anti-vibration arrangement according to any of claims 7 to 10, wherein the connecting portion (245) of the resiliently deformable outlet member (24) is formed of a series of spaced ribs arranged radially from the motor inlet axis (38).

12. An anti-vibration arrangement according to any of claims 7 to 11, wherein the inner portion (241) of the resiliently deformable outlet member (24) and the connecting portion (245) of the resiliently deformable outlet member (24) are arranged concentrically.

13. An anti-vibration arrangement according to any preceding claim, wherein the inner portion (358) of the resiliently deformable collar (52) has a greater thickness than the connecting portion (360) of the resiliently deformable collar (52), and/or wherein the inner portion (358) of the resiliently deformable collar (52) and connection portion (360) of the resiliently deformable collar (52) are arranged concentrically.

14. An anti-vibration arrangement according to any preceding claim, wherein the connecting portion (360) of the resiliently deformable collar (52) is formed of a flexible membrane, and/or wherein the connecting portion (360) of the resiliently deformable collar (52) is formed of a series of spaced ribs arranged radially from the motor inlet axis (38).

15. An anti-vibration arrangement according to claim 1 comprising: a protrusion (48) located on an internal surface (44) of the housing; wherein the protrusion (48) is located substantially in line with the pump motor inlet (36) and is configured to diffuse pulsation from the pump motor inlet (36).

## Patentansprüche

1. Antivibrationsanordnung für eine Kondensatpumpe (10), umfassend:
ein Gehäuse, das eine erste Öffnung (354) aufweist;
einen Hubkolbenpumpenmotor (20), der in dem Gehäuse enthalten ist, mit einem Pumpenmotoreinlass (36) in Fluidverbindung mit einem Pumpenmotorauslass (30) aufweist; und eine elastisch verformbare Manschette (52), die in der ersten Öffnung (354) fixiert ist, mit einem Loch (54), durch das der Pumpenmotoreinlass (36) vorsteht,
wobei die elastisch verformbare Manschette (52) einen äußeren Abschnitt (356), der am Gehäuse fixiert ist, einen inneren Abschnitt (358) zum Stützen des Pumpenmotoreinlasses (36) und einen Verbindungsabschnitt (360), der sich zwischen dem äußeren Abschnitt (356) und dem inneren Abschnitt (358) befindet, umfasst, sodass Schwingungen des Hubkolbenpumpenmotors (20) bewirken, dass sich der Verbindungsabschnitt (360) verformt und es dem inneren Abschnitt (358) ermöglicht, sich hin- und hergehend zu bewegen.

2. Antivibrationsanordnung nach Anspruch 1, ferner umfassend:
einen ausgeformten Teil, der die elastisch verformbaren Manschette (52) und eine Anordnung von Stützelementen (57) zum Stützen des Pumpenmotors (20) umfasst.

3. Antivibrationsanordnung nach Anspruch 2, ferner umfassend:
mindestens ein elastisch verformbares Wandelement (22, 23), das dazu konfiguriert ist, mit einer externen Verkleidung in Eingriff zu kommen,
wobei das elastisch verformbare Wandelement (22, 23) dazu konfiguriert ist, Vibrationen zwischen der Kondensatpumpe (10) und der externen Pumpenverkleidung zu absorbieren.

4. Antivibrationsanordnung nach Anspruch 3, wobei das elastisch verformbare Wandelement (22, 23) aus einem thermoplastischen Elastomer hergestellt ist.

5. Antivibrationsanordnung nach einem der Ansprüche 2 bis 4, wobei der ausgeformte Teil dazu konfiguriert ist, eine Dichtung zu bilden, wenn er mit einem Kondensatpumpenreservoir verbunden ist.

6. Antivibrationsanordnung nach einem der vorhergehenden Ansprüche, wobei das Gehäuse mindestens eine im Wesentlichen gekrümmte Oberfläche (18a) umfasst und/oder wobei die elastisch verformbare Manschette (52) aus einem thermoplastischen Elastomer hergestellt ist.

7. Antivibrationsanordnung nach einem vorhergehenden Anspruch, wobei das Gehäuse eine zweite Öffnung (16) umfasst, in der ein elastisch verformbares Auslasselement (24) fixiert ist, wobei das elastisch verformbare Auslasselement (24) einen äußeren Abschnitt (243), der an dem Gehäuse fixiert ist, einen inneren Abschnitt (241) zum Stützen des Pumpenmotorauslasses (30) mit einem Loch (247), durch das der Pumpenmotorauslass (30) vorsteht, und einen Verbindungsabschnitt (245) umfasst, der sich zwischen dem äußeren Abschnitt (243) und dem inneren Abschnitt (241) befindet, sodass Schwingungen des Hubkolbenpumpenmotors (20) bewirken, dass sich der Verbindungsabschnitt (245) verformt und es dem inneren Abschnitt (241) ermöglicht, sich hin- und hergehend oder seitlich zu bewegen.

8. Antivibrationsanordnung nach Anspruch 7, wobei ein beliebiges von dem elastisch verformbaren Auslasselement (24) oder dem elastisch verformbaren Wandelement (22, 23) durch Vorsprünge (25, 60) in dem Gehäuse fixiert ist.

9. Antivibrationsanordnung nach Anspruch 7 oder Anspruch 8, wobei der innere Abschnitt (241) des elastisch verformbaren Auslasselements (24) eine größere Dicke als der Verbindungsabschnitt (245) des elastisch verformbaren Auslasselements (24) aufweist.

10. Antivibrationsanordnung nach einem der Ansprüche 7 bis 9, wobei der Verbindungsabschnitt (245) des elastisch verformbaren Auslasselements (24) aus einer flexiblen Membran gebildet ist.

11. Antivibrationsanordnung nach einem der Ansprüche 7 bis 10, wobei der Verbindungsabschnitt (245) des elastisch verformbaren Auslasselements (24) aus einer Reihe von beabstandeten Rippen gebildet ist, die von der Motoreinlassachse (38) aus radial angeordnet sind.

12. Antivibrationsanordnung nach einem der Ansprüche 7 bis 11, wobei der innere Abschnitt (241) des elastisch verformbaren Auslasselements (24) und der Verbindungsabschnitt (245) des elastisch verformbaren Auslasselements (24) konzentrisch angeordnet sind.

13. Antivibrationsanordnung nach einem vorhergehenden Anspruch, wobei der innere Abschnitt (358) der elastisch verformbaren Manschette (52) eine größere Dicke als der Verbindungsabschnitt (360) der elastisch verformbaren Manschette (52) aufweist und/oder wobei der innere Abschnitt (358) der elastisch verformbaren Manschette (52) und der Verbindungsabschnitt (360) der elastisch verformbaren Manschette (52) konzentrisch angeordnet sind.

14. Antivibrationsanordnung nach einem vorhergehenden Anspruch, wobei der Verbindungsabschnitt (360) der elastisch verformbaren Manschette (52) aus einer flexiblen Membran gebildet ist und/oder wobei der Verbindungsabschnitt (360) der elastisch verformbaren Manschette (52) aus einer Reihe von beabstandeten Rippen gebildet ist, die von der Motoreinlassachse (38) aus radial angeordnet sind.

15. Antivibrationsanordnung nach Anspruch 1, umfassend: einen Vorsprung (48), der sich an einer inneren Oberfläche (44) des Gehäuses befindet, wobei der Vorsprung (48) sich im Wesentlichen in einer Linie mit dem Pumpenmotoreinlass (36) befindet und dazu konfiguriert ist, eine Pulsation von dem Pumpenmotoreinlass (36) zu zerstreuen.

## Revendications

1. Agencement anti-vibration pour une pompe à condensat (10) comprenant :
un boîtier possédant une première ouverture (354) ;
un moteur de pompe à mouvement alternatif (20) contenu dans le boîtier possédant une entrée (36) de moteur de pompe en communication fluidique avec une sortie (30) de moteur de pompe ; et
un collier élastiquement déformable (52) fixé à l'intérieur de la première ouverture (354) possédant une ouverture (54) à travers laquelle l'entrée (36) de moteur de pompe fait saillie ;
ledit collier élastiquement déformable (52) comprenant une partie externe (356) fixée au boîtier, une partie interne (358) pour supporter l'entrée (36) de moteur de pompe et une partie de raccordement (360) située entre la partie externe (356) et la partie interne (358), de sorte que des oscillations du moteur de pompe à mouvement alternatif (20) amènent la partie de raccordement (360) à se déformer et permettent à la partie interne (358) de se déplacer selon un mouvement alternatif.

2. Agencement anti-vibration selon la revendication 1 comprenant en outre :
une section moulée comprenant le collier élastiquement déformable (52) et un agencement d'éléments de support (57) pour supporter le moteur de pompe (20).

3. Agencement anti-vibration selon la revendication 2 comprenant en outre :
au moins un élément de paroi élastiquement déformable (22, 23) conçu pour se mettre en prise avec un carter extérieur,
ledit élément de paroi élastiquement déformable (22, 23) étant conçu pour absorber des vibrations entre la pompe à condensat (10) et le carter de pompe extérieur.

4. Agencement anti-vibration selon la revendication 3, ledit élément de paroi élastiquement déformable (22, 23) étant fabriqué à partir d'un élastomère thermoplastique.

5. Agencement anti-vibration selon l'une quelconque des revendications 2 à 4, ladite section moulée étant conçue pour former un joint d'étanchéité lorsqu'elle est raccordée à un réservoir de pompe à condensat.

6. Agencement anti-vibration selon l'une quelconque des revendications précédentes, ledit boîtier comprenant au moins une surface sensiblement incurvée (18a), et/ou ledit collier élastiquement déformable (52) étant fabriqué à partir d'un élastomère thermoplastique.

7. Agencement anti-vibration selon une quelconque revendication précédente, ledit boîtier comprenant une seconde ouverture (16) à l'intérieur de laquelle un élément de sortie élastiquement déformable (24) est fixé, ledit élément de sortie élastiquement déformable (24) comprenant une partie externe (243) fixée au boîtier, une partie interne (241) pour supporter la sortie (30) de moteur de pompe possédant une ouverture (247) à travers laquelle la sortie (30) de moteur de la pompe fait saillie, et une partie de raccordement (245) située entre la partie externe (243) et la partie interne (241), de sorte que des oscillations du moteur de pompe alternatif (20) amènent la partie de raccordement (245) à se déformer et permet à la partie interne (241) de se déplacer selon un mouvement alternatif ou de manière latérale.

8. Agencement anti-vibration selon la revendication 7, l'un quelconque de l'élément de sortie élastiquement déformable (24) ou de l'élément de paroi élastiquement déformable (22, 23) étant fixé par des saillies (25, 60) dans le boîtier.

9. Agencement anti-vibration selon la revendication 7 ou la revendication 8, ladite partie interne (241) de l'élément de sortie élastiquement déformable (24) possédant une épaisseur supérieure à la partie de raccordement (245) de l'élément de sortie élastiquement déformable (24).

10. Agencement anti-vibration selon l'une quelconque des revendications 7 à 9, ladite partie de raccordement (245) de l'élément de sortie élastiquement déformable (24) étant formée d'une membrane flexible.

11. Agencement anti-vibration selon l'une quelconque des revendications 7 à 10, ladite partie de raccordement (245) de l'élément de sortie élastiquement déformable (24) étant formée d'une série de nervures espacées agencées radialement à partir de l'axe (38) d'entrée de moteur.

12. Agencement anti-vibration selon l'une quelconque des revendications 7 à 11, ladite partie interne (241) de l'élément de sortie élastiquement déformable (24) et ladite partie de raccordement (245) de l'élément de sortie élastiquement déformable (24) étant agencées concentriquement.

13. Agencement anti-vibration selon une quelconque revendication précédente, ladite partie interne (358) du collier élastiquement déformable (52) possédant une épaisseur supérieure à la partie de raccordement (360) du collier élastiquement déformable (52), et/ou ladite partie interne (358) du collier élastiquement déformable (52) et ladite partie de raccordement (360) du collier élastiquement déformable (52) étant agencées concentriquement.

14. Agencement anti-vibration selon une quelconque revendication précédente, ladite partie de raccordement (360) du collier élastiquement déformable (52) étant formée d'une membrane flexible, et/ou ladite partie de raccordement (360) du collier élastiquement déformable (52) étant formée d'une série de nervures espacées agencées radialement à partir de l'axe (38) d'entrée de moteur.

15. Agencement anti-vibration selon la revendication 1, comprenant : une saillie (48) située sur une surface intérieure (44) du boîtier ; ladite saillie (48) étant située sensiblement en ligne avec l'entrée (36) de moteur de pompe et étant conçue pour diffuser les pulsations à partir de l'entrée (36) de moteur de pompe.
